Europäisches Patentamt

European Patent Office

Office européen des brevets

(11) Veröffentlichungsnummer: **0 325 801**

**A1**

(12) **EUROPÄISCHE PATENTANMELDUNG**

(21) Anmeldenummer: 88121876.2

(22) Anmeldetag: 30.12.88

(51) Int. Cl.⁴: **G11B 5/84 , B24B 21/04 , B24B 1/00 , B24B 7/13 , B24B 21/00**

(30) Priorität: 07.01.88 DE 3800196

(43) Veröffentlichungstag der Anmeldung:
02.08.89 Patentblatt 89/31

(84) Benannte Vertragsstaaten:
**DE FR GB NL**

(71) Anmelder: **BASF Aktiengesellschaft
Carl-Bosch-Strasse 38
D-6700 Ludwigshafen(DE)**

(72) Erfinder: **Schneider, Norbert
Madenburgstrasse 5f
D-6701 Altrip(DE)**
Erfinder: **Kreimes, Norbert
Rheinecke 14
D-6700 Ludwigshafen(DE)**
Erfinder: **Bettinger, Guenter
Kolpingstrasse 18 a
D-6707 Schifferstadt(DE)**
Erfinder: **Boehm, Udo
Am Weidenschlag 6
D-6700 Ludwigshafen(DE)**
Erfinder: **Kreitner, Ludwig, Dr.
Liebigstrasse 10
D-6148 Heppenheim(DE)**
Erfinder: **Lehner, August
Wachenheimer Strasse 4
D-6701 Roedersheim-Gronau(DE)**
Erfinder: **Lenz, Werner, Dr.
Heinrich-Baermann-Strasse 14
D-6702 Bad Duerkheim(DE)**
Erfinder: **Nerschbach, Gerhard
Nelkenstrasse 3
D-6704 Mutterstadt(DE)**
Erfinder: **Niederberger, Werner
Geranienweg 2
D-6834 Ketsch(DE)**
Erfinder: **Stransky, Reinhard
Roter-Turm-Weg 5
D-6706 Wachenheim(DE)**
Erfinder: **Grau, Werner, Dr.
Tuchbleiche 5
D-6712 Bobenheim-Roxheim(DE)**

(54) **Verfahren zum Bearbeiten der Oberfläche magnetischer Aufzeichnungsträger.**

(57) Zur Bearbeitung der Schichtoberfläche eines magnetischen Aufzeichnungsträgers durch Schleifen wird zwischen der Oberfläche und dem Schleifmittel ein definierter Kontaktdruck hergestellt und eine Relativgeschwindigkeit in der Form erzeugt, daß das Schleifmittel mit gegenüber dem fortlaufenden Transport des Aufzeichnungsträgers mindestens zweifacher Geschwindigkeit in oder gegen dessen Richtung bewegt wird.

## Verfahren zum Bearbeiten der Oberfläche magnetischer Aufzeichnungsträger

Die Erfindung betrifft ein Verfahren zum Bearbeiten der Oberfläche magnetischer, bahn- oder bandförmiger Aufzeichnungsträger durch Schleifen, bei dem zwischen der zu bearbeitenden Oberfläche und dem Schleifmittel eine Relativbewegung und ein definierter Kontaktdruck besteht.

Magnetische, bahn- oder bandförmige Aufzeichnungsträger für hohe Aufzeichnungsdichten werden durch Beschichten flexibler Unterlagen, z.B. Kunststoffolien, mit einem mit magnetischen Teilchen, insbesondere auf Basis Metallpigment, Co-dotierten Eisenoxiden, feinteiligem Chromdioxid sowie Bariumferrit, pigmentierten Lack hergestellt. Die nach dem Beschichtungsvorgang noch bestehenden Unebenheiten müssen mit Rücksicht auf die geringe Schichtdicke schonend beseitigt und eine möglichst kleine, definierte Feinrauhigkeit erreicht werden.

Diese Maßnahme ist notwendig, um einen innigen Kontakt zwischen Aufzeichnungsschicht und Magnetkopf zu gewährleisten. Dadurch sollen Beschädigungen der Schichtoberfläche beim Schreib-/Lesebetrieb, z.B. durch Herausreißen von Schichtteilen durch den Kopf an Erhebungen in der Oberfläche vermieden und möglichst geringe Schwankungen der Lesespannung sowie ein hoher Lesespannungspegel bei möglichst geringer drop-out-Rate erzielt werden.

Ein häufig zur Oberflächenbearbeitung von flexiblen Aufzeichnungsträgern eingesetztes Verfahren ist das Kalandrieren, bei dem z.B. Kunststoffolien beschichtet und unbeschichtet zwischen zwei sich drehenden Kalanderwalzen, die definiert gegeneinander drücken, hindurchgezogen werden. Das Kalandrieren wird üblicherweise in Längsrichtung der Folienbahn durchgeführt. Geringfügige Unregelmäßigkeiten in der Walzenoberfläche verschlechtern daher die Pegelkonstanz der Lesespannung und können zu Pegeleinbrüchen führen. Ferner werden die Reibungswerte durch die extreme Komprimierung der Magnetschicht stark erhöht. In die Beschichtung gelangte Fremdpartikel werden durch das Kalandrieren häufig nicht in die Schicht eingedrückt und führen dann zu Schreib-/Lesefehlern.

In der DE-OS 31 03 874 ist eine Oberflächenbearbeitung magnetischer Aufzeichnungsträger durch Schleifen beschrieben, bei der für bahnförmige Aufzeichnungsträger ein Schleifband entlang diesem geführt ist, welches mittels Andruckrollen oder einer Andruckleiste mit der zu bearbeitenden Oberfläche in Kontakt gebracht wird. Dabei wird das Schleifband von einer Vorratsrolle zu einer Aufwickelrolle transportiert. Die Geschwindigkeit des Schleifbandes ist unwesentlich höher als die des Aufzeichnungsträgers, wodurch das Schleifband nicht in dem gewünschten Maße und der Qualität auf die zu bearbeitende Oberfläche einwirkt.

Dementsprechend bestand die Aufgabe, für die Oberflächenbearbeitung magnetischer Aufzeichnungsträger eine verbesserte Schleifmethode zu entwickeln.

Die Lösung der Aufgabe besteht in einem Verfahren der eingangs geschilderten Art, bei dem gemäß der Erfindung das Schleifmittel mit gegenüber dem fortlaufenden Transport des Aufzeichnungsträgers mindestens zweifacher Geschwindigkeit in oder gegen dessen Richtung bewegt wird.

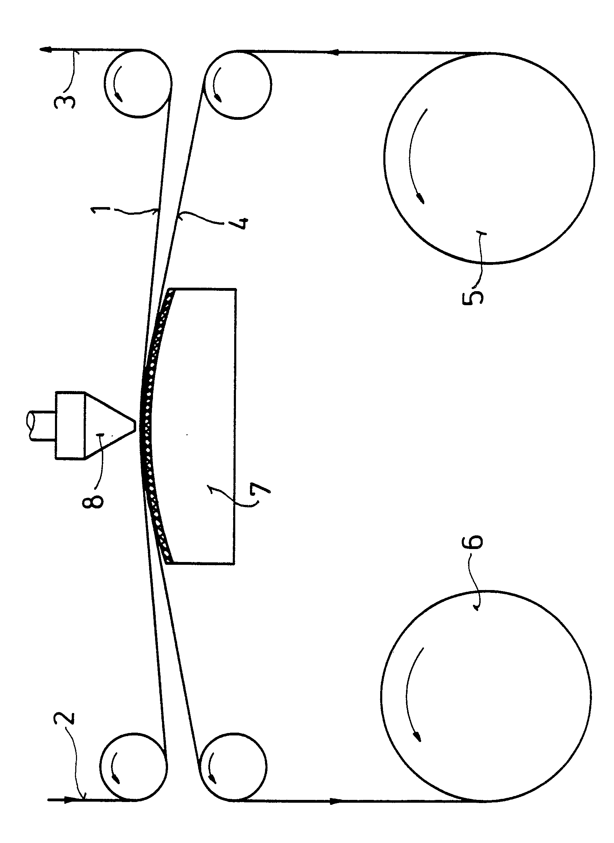

Die Erfindung ist anhand eines in der Zeichnung schematisch dargestellten Ausführungsbeispiels nachfolgend näher beschrieben.

Eine mit einer magnetisierbaren Schicht versehene Folienbahn 1 oder ein Magnetband wird von einer Abwickelstation 2 mit einer Geschwindigkeit zwischen 10 und 300 m/min., vorzugsweise zwischen 40 und 60 m/min., zu einer Aufwickelstation 3 bewegt. Zur Bearbeitung der Schichtoberfläche ist parallel zu der im weiteren als Aufzeichnungsträger bezeichneten Folienbahn oder Magnetband ein Schleifband 4 von einer Vorratsrolle 5 zu einer Aufwickelrolle 6 bewegbar geführt. Zwischen den beiden Rollen ist ein Stützkörper 7 für das Schleifband angeordnet, auf dem der Aufzeichnungsträger 1 mit Hilfe eines Gasstrahls, beispielsweise eines Luftstrahls, aus einer Schlitzdüse 8 mit dem Schleifband, das eine Körnung von 1 bis 20 μm aufweist, in Kontakt gebracht wird. Anstelle des Gasstrahls können auch mechanische Andruckelemente eingesetzt werden. Ebenso kann das Schleifmittel auch aus einer Keramikwalze bestehen, deren Oberflächenbeschaffenheit der vorstehend genannten Körnung entspricht.

Das Schleifband 4 kann in beiden Richtungen, vorteilhafterweise jedoch entgegen dem Aufzeichnungsträger 1 bewegt werden. Ausschlaggebend für die geforderte Schleifwirkung ist dabei, daß das Schleifband relativ zum Aufzeichnungsträger mit mindestens dessen zweifacher, vorzugsweise mit 10- bis 200-facher Geschwindigkeit fortbewegt wird.

Eine Steigerung der Schleifwirkung kann dadurch erreicht werden, daß der geradlinigen Bewegung des Schleifbandes 4 eine in der Kontaktebene kreisende Bewegung überlagert wird. Hierzu ist der Stützkörper 7 in der Ebene der Auflagefläche für das Schleifband exzentrisch rotierbar gelagert und mit einem geeigneten Antrieb verbunden. Je nach Drehzahl des Stützkörpers kann damit eine Schleifbandgeschwindigkeit zwischen 50 und 5000 m/min., vorzugsweise zwischen 70 und 1000 m/min., erreicht werden, ohne daß ein schneller Schleifbandvorschub notwendig ist. Der Verbrauch an Schleifband ist dadurch erheblich reduziert.

Durch die hohe Relativgeschwindigkeit des Schleifbandes gegenüber dem Aufzeichnungsträger ist neben einer guten Schleifwirkung eine ausreichend lange Verweilzeit der zu bearbeitenden Oberfläche des Aufzeichnungsträgers im Kontaktbereich mit dem Schleifband gegeben.

Versuche im technischen Maßstab haben gezeigt, daß mit dem Verfahren nach der Erfindung auch bei unkalandrierten Bändern eine sehr gleichmäßige Feinrauhigkeit der Schichtoberfläche erzielt werden kann, so daß in Verbindung mit dem dabei entstehenden höheren Porenvolumen der Schicht ein bedeutend verbessertes Reibungsverhalten erreicht wird. Beim bisher üblichen Kalandrieren des Aufzeichnungsträgers hingegen wird das Porenvolumen erheblich reduziert, so daß sich losgelöste Schichtbestandteile an der Oberfläche anreichern können und das Reibungsverhalten negativ beeinflussen. Darüberhinaus führt der dabei sich einstellende Abstand zwischen Schichtoberfläche und Magnetkopf zu Verlusten insbesondere bei der Wiedergabe hoher Frequenzen. Nicht kalandrierte, nach dem erfindungsgemäßen Verfahren bearbeitete Aufzeichnungsträger besitzen dagegen durch das größere Porenvolumen eine ausreichende Depotwirkung für die losgelösten Bestandteile, so daß die vorstehend aufgezeigten Nachteile nicht auftreten. Zusätzlich ist die magnetisierbare Schicht weitgehend frei von Fehlstellen (drop-out). Selbstverständlich ist es auch möglich, kalandrierte Magnetbandoberflächen nach diesem Verfahren zu bearbeiten, wenn es das Eigenschaftsprofil erforderlich macht.

## Ansprüche

1. Verfahren zum Bearbeiten der Oberfläche magnetischer, bahn- oder bandförmiger Aufzeichnungsträger durch Schleifen, bei dem zwischen der zu bearbeitenden Oberfläche und dem Schleifmittel eine Relativbewegung und ein definierter Kontaktdruck besteht, dadurch gekennzeichnet, daß das Schleifmittel mit gegenüber dem fortlaufenden Transport des Aufzeichnungsträgers mindestens zweifacher Geschwindigkeit in oder gegen dessen Richtung bewegt wird.

2. Verfahren nach Anspruch 1, dadurch gekennzeichnet, daß das Schleifmittel mit der 10- bis 200-fachen Geschwindigkeit des Aufzeichnungsträgers bewegt wird.

3. Verfahren nach Anspruch 1 und 2, dadurch gekennzeichnet, daß der zur Transportrichtung des Aufzeichnungsträgers parallelen Bewegung des Schleifmittels eine in der Ebene des Aufzeichnungsträgers kreisende Bewegung überlagert wird.

4. Verfahren nach Anspruch 1 bis 3, dadurch gekennzeichnet, daß der Kontaktdruck zwischen der zu bearbeitenden Oberfläche des Aufzeichnungsträgers und dem Schleifmittel mittels eines Gasstrahls aus einer Schlitzdüse, der den Aufzeichnungsträger oder das Schleifmittel beaufschlagt, hergestellt wird.

444/87

**Europäisches Patentamt**

## EUROPÄISCHER RECHERCHENBERICHT

Nummer der Anmeldung

EP 88 12 1876

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,P | PATENT ABSTRACTS OF JAPAN Band 12, Nr. 52 (M-668)(2899), 17. Februar 1988; & JP - A- 62 199 347 (FUJI PHOTO FILM) 03.09.1987 --- | 1,2,4 | G 11 B 5/84 B 24 B 21/04 B 24 B 1/00 B 24 B 7/13 B 24 B 21/00 |
| Y | DE-A-2 803 914 (BASF) * Ansprüche 1,2; Seite 7, Zeilen 21-23 * --- | 1,2,4 | |
| A,D | DE-A-3 103 874 (BASF) * Seite 9, Zeilen 22-25 * ----- | 1,2,4 | |

|  |
|---|
| **RECHERCHIERTE SACHGEBIETE (Int. Cl.4)** |
| G 11 B 5/00 B 24 B 21/00 |

Der vorliegende Recherchenbericht wurde für alle Patentansprüche erstellt

| Recherchenort | Abschlußdatum der Recherche | Prüfer |
|---|---|---|
| BERLIN | 25-04-1989 | CHAUMERON B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)